# FASCICULE DE BREVET EUROPEEN

(11) **EP 1 459 502 B1**
(45) Date de publication et mention de la délivrance du brevet: **30.07.2008**
(21) Numéro de dépôt: 02805797.4
(22) Date de dépôt: 16.12.2002
(51) Int. Cl.: H04M 1/2745

(54) **SYSTEME ET PROCEDE D'ASSISTANCE A L'ETABLISSEMENT D'UNE LIAISON TELEPHONIQUE UTILISANT UNE REFERENCE TELEPHONIQUE AFFICHEE SUR UN ECRAN**
SYSTEM UND VERFAHREN ZUR UNTERSTÜTZUNG DES AUFBAUENS EINER FERNSPRECHVERBINDUNG DURCH VERWENDUNG EINES AUF EINEM SCHIRM ANGEZEIGTEN FERNSPRECHBEZUGSZEICHENS
SYSTEM AND METHOD FOR ASSISTING IN SETTING UP A TELEPHONE LINK USING A TELEPHONE REFERENCE DISPLAYED ON A SCREEN

(30) Priorité: 24.12.2001 FR 0116832
(43) Date de publication de la demande: 22.09.2004
(73) Titulaire: FRANCE TELECOM, 75015 Paris (FR)
(72) Inventeur: BRUNEL, Jérôme, F-14220 COMBRAY (FR); FEUILLET, Thibaut, F-14000 CAEN (FR); GRIMAULT, Jean-Luc, F-14120 MONDEVILLE (FR)
(74) Mandataire: Loisel, Bertrand
(86) Numéro de dépôt international: PCT/FR2002/004374
(87) Numéro de publication internationale: WO 2003/056788

(56) Documents cités:
- EP-A- 0 633 683
- WO-A-00/01132
- WO-A-01/44911
- WO-A-01/65820
- US-A- 5 903 631

## Description

L'invention concerne un système d'assistance à l'établissement d'une liaison téléphonique vers un correspondant.

Plus précisément, l'invention traite d'un système d'assistance comportant :
- un dispositif d'affichage des références téléphoniques du correspondant, équipé d'une mémoire apte à contenir les références téléphoniques à afficher,
- un ou plusieurs terminaux de télécommunication autonomes, distincts du dispositif d'affichage et propres à fonctionner indépendamment du dispositif d'affichage, équipés d'une mémoire apte à contenir les références téléphoniques du correspondant à appeler, chaque terminal étant apte à établir une liaison téléphonique vers le correspondant dont les références téléphoniques sont enregistrées dans sa mémoire,

Aujourd'hui, lorsqu'un utilisateur veut établir une liaison téléphonique, il peut rechercher le numéro de téléphone de son correspondant sur Internet. Pour cela, il consulte un annuaire en ligne à l'aide de son ordinateur. Le numéro de téléphone de son correspondant s'affiche alors sur l'écran de son ordinateur. Il doit ensuite composer manuellement sur son téléphone, par exemple un téléphone portable, le numéro de téléphone affiché sur son écran d'ordinateur pour établir une liaison téléphonique vers son correspondant. Cette opération de composition, sur son téléphone, du numéro de téléphone affiché sur l'écran, est souvent l'occasion de commettre une erreur de retranscription du numéro de téléphone affiché. Elle est donc une source d'erreur et de perte de temps.

De WO 01/65820 A il est connu un système permettant de transférer un numéro de téléphone d'un dispositif d'affichage vers un seul téléphone.

L'invention vise à remédier à cet inconvénient en proposant un système pour assister l'utilisateur lors de l'établissement d'une liaison téléphonique vers un correspondant dont les références téléphoniques sont affichées sur un écran.

Elle a donc pour objet un système conforme à la revendication 1.

Le système décrit ci-dessus permet d'éviter les erreurs. En effet, les références téléphoniques, telles que par exemple un numéro de téléphone, sont automatiquement transmises du dispositif d'affichage vers le terminal de télécommunication sans intervention de l'utilisateur. Ainsi, les erreurs de retranscription sont supprimées et le transfert des références téléphoniques vers le terminal de télécommunication s'effectue beaucoup plus rapidement.

D'autres caractéristiques d'un système d'assistance selon l'invention apparaissent dans les revendications dépendantes.

L'invention a également pour objet un procédé d'assistance à l'établissement d'une liaison téléphonique vers un correspondant à appeler conforme à la revendication 8.

D'autres caractéristiques d'un procédé conforme à l'invention apparaissent dans les revendications dépendantes.

L'invention a également pour objet une unité de transfert conforme à la revendication 11.

D'autres caractéristiques d'une unité de transfert selon l'invention apparaissent dans les revendications dépendantes.

L'invention sera mieux comprise à la lecture de la description qui va suivre, donnée uniquement à titre d'exemple et faite en se référant aux dessins sur lesquels :
- la figure 1 est une illustration schématique de l'architecture d'un système d'assistance conforme à l'invention, et
- la figure 2 est un organigramme d'un procédé d'assistance à l'établissement d'une liaison téléphonique conforme à l'invention.

Le système d'assistance conforme à l'invention va être décrit ici dans le cas particulier où les références téléphoniques du correspondant à appeler correspondent à son numéro de téléphone.

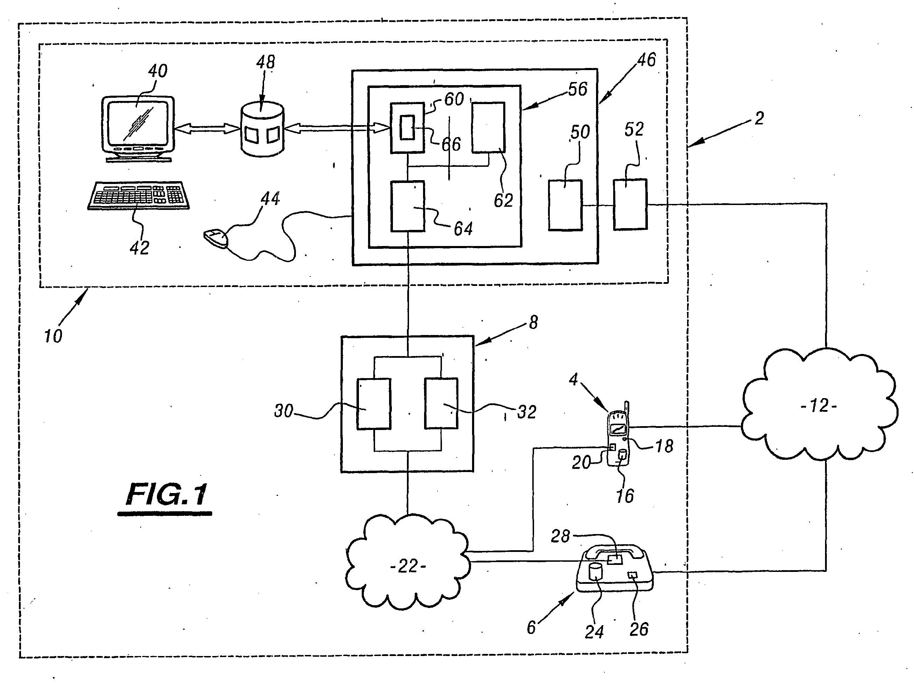

La figure 1 représente un système 2 d'assistance à l'établissement d'une liaison téléphonique vers un correspondant. Le système 2 comporte deux terminaux de télécommunication 4, 6 raccordés par l'intermédiaire d'une unité de transfert 8 à un ordinateur 10.

Les terminaux de télécommunication 4 et 6 sont ici des téléphones aptes à établir une liaison téléphonique vers un correspondant. Pour cela, ils sont raccordés à un réseau public 12 de transmission d'informations. Le réseau public 12 est par exemple le réseau téléphonique grande distance d'un opérateur de téléphonie ou un réseau cellulaire type GSM.

Le terminal 4 est par exemple un téléphone portable équipé d'une mémoire 16 destinée à contenir un numéro de téléphone et d'un bouton 18. Le bouton 18 est apte à déclencher la numérotation du numéro de téléphone enregistré dans la mémoire 16 lorsqu'il est enfoncé. Le terminal 4 comporte également un émetteur-récepteur radio local 20 apte à enregistrer dans la mémoire 16 des informations transmises par l'unité de transfert 8. L'émetteur-récepteur 20 est par exemple raccordé à l'unité de transfert 8 par l'intermédiaire d'un réseau privé 22 de transmission d'informations. Ce réseau privé 22 est ici un réseau conforme à la norme "Bluetooth".

Le terminal 6 est par exemple un téléphone fixe également raccordé au réseau public 12. Ce terminal 6 comporte une mémoire 24, un bouton 26 et un émetteur-récepteur 28 respectivement similaires à la mémoire 16, au bouton 18 et l'émetteur-récepteur 20 du terminal 4. Ainsi, le bouton 26 est destiné à activer la numérotation automatique du numéro de téléphone contenu dans la mémoire 24 du terminal 6. L'émetteur-récepteur 28 est quant à lui apte également à recevoir, par l'intermédiaire du réseau privé 22, un numéro de téléphone et à l'enregistrer dans la mémoire 24.

L'unité 8 de transfert est destinée à échanger automatiquement des informations entre le dispositif d'affichage 10 et les terminaux 4 et 6. Pour cela, dans le mode de réalisation particulier décrit ici, l'unité 8 est d'un côté directement raccordée au dispositif d'affichage 10 et, de l'autre côté, raccordée aux terminaux 4 et 6 par l'intermédiaire du réseau privé 22.

L'unité 8 comporte ici à titre d'exemple un module électronique 30 de transfert automatique d'informations et un module 32 d'établissement automatique d'une liste de terminaux de télécommunication disponibles.

Le module 30 est apte, à partir d'un numéro de téléphone et d'un identificateur d'un terminal reçus du dispositif d'affichage 10, à transmettre, par l'intermédiaire du réseau 22, le numéro de téléphone reçu au terminal de télécommunication correspondant à l'identificateur de terminal reçu.

Le module 32 est apte à identifier automatiquement les terminaux de télécommunication raccordés à l'unité 8 par l'intermédiaire du réseau 22. Ce module 32 est également propre à transmettre au dispositif d'affichage 10 une liste des terminaux de télécommunication qu'il a identifiés.

Le dispositif d'affichage 10 est ici, à titre d'exemple, un ordinateur équipé d'un écran 40, d'un clavier 42, d'une souris 44 et d'une unité centrale 46. L'unité centrale 46 et l'écran 40 partagent une mémoire vidéo 48. Cette mémoire vidéo 48 est destinée à contenir les informations correspondant à l'image affichée par l'écran 40.

Ici, cet ordinateur 10 est également équipé d'un navigateur Internet 50 et d'un modem 52 raccordés au réseau public 12 pour afficher des pages Internet sur l'écran 40.

Le dispositif d'affichage 10 comporte également un logiciel 56 de transfert automatique de références téléphoniques apte à coopérer avec l'unité de transfert 8. Ce logiciel 56 comporte ici essentiellement trois modules : un module 60 d'extraction d'un numéro de téléphone dans une zone d'image, un module 62 de sélection d'un terminal de télécommunication, et un module 64 de transmission de références téléphoniques vers l'unité 8.

Le module 60 est associé à la mémoire vidéo 48. Ce module 60 est apte à extraire de la mémoire vidéo 48 un numéro de téléphone contenu dans une zone de l'écran 40 définie par exemple à l'aide de la souris 44. Ce module 60 est ici réalisé à l'aide d'un sous-module 66 de reconnaissance de caractères apte à analyser les pixels de la zone de l'écran 40 pour extraire les caractères alphanumériques qu'elle contient. Ainsi, ce module 60 est utilisable quel que soit le logiciel tiers utilisé pour afficher le numéro de téléphone sur l'écran 40. Le logiciel tiers est ici le navigateur Internet 50, mais il pourrait aussi être un simple éditeur de texte.

Le module 62 est destiné à permettre à un utilisateur du dispositif d'affichage de sélectionner un terminal de télécommunication disponible à proximité de l'utilisateur. A cet effet, le module 62 est adapté pour recevoir la liste des terminaux de télécommunication disponibles établie par le module 32 de l'unité 8 et pour afficher cette liste à l'écran 40 de manière à ce que l'utilisateur puisse sélectionner l'un des terminaux de cette liste.

Le module 64 est un émetteur d'informations associé aux modules 60 et 62 pour transmettre vers l'unité de transfert 8 le numéro de téléphone extrait par le module 60 et un identificateur du terminal de télécommunication sélectionné par l'utilisateur à l'aide du module 62.

Une partie du logiciel 56 formant moyen d'activation est résidente, c'est-à-dire qu'elle est exécutée en permanence par l'ordinateur 10. Cette partie résidente a pour fonction de détecter l'enfoncement par l'utilisateur d'une combinaison de touches particulières. Ici cette combinaison de touches particulières est la combinaison de touches suivantes : "CTRL+T". Cette partie résidente est apte à déclencher l'activation successive des modules 60 et 62 pour initier le transfert d'un numéro de téléphone contenu dans une zone de l'écran 40 sélectionnée avec la souris 44.

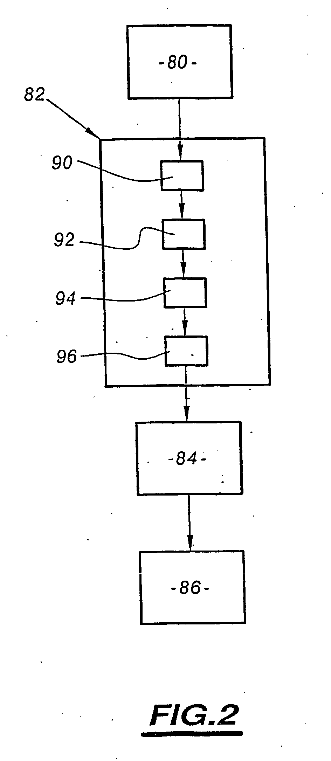

Le fonctionnement du système 2 va maintenant être décrit en regard de la figure 2 dans le cas particulier où le numéro de téléphone affiché sur l'écran 40 est extrait d'une page Internet.

Le procédé de la figure 2 comporte une étape 80 d'affichage de numéros de téléphone, une étape 82 de définition des informations à transmettre, une étape 84 de transfert automatique des informations précédemment définies, suivie d'une étape 86 d'établissement d'une liaison téléphonique à partir des informations automatiquement transférées.

L'étape 80 d'affichage est ici une étape de consultation à l'aide du navigateur Internet 50 d'un annuaire électronique en ligne et d'affichage des numéros de téléphone recherchés sur l'écran 40. On suppose ici que la page Internet affichée sur l'écran 40 comporte plusieurs numéros de téléphone.

Après l'étape 80, l'étape 82 de définition des informations à transmettre débute. Cette étape 82 comporte quatre opérations successives 90, 92, 94 et 96.

L'opération 90 est une opération de définition de la zone particulière de l'écran comportant le numéro de téléphone du correspondant que l'on souhaite appeler. Cette opération 90 consiste par exemple à définir un cadre à l'aide de la souris 44 autour de la zone d'écran contenant le numéro de téléphone du correspondant.

Ensuite, lorsque l'utilisateur enfonce la combinaison de touches "CTRL+T", l'opération 92 d'extraction du numéro de téléphone contenu dans la zone d'écran précédemment définie débute. Cette opération 92 est exécutée par le module 60 d'extraction d'un numéro de téléphone dans une zone d'écran. Pour cela, le sous-module de reconnaissance de caractères 66 détermine, à partir des données enregistrées dans la mémoire vidéo 48 et correspondant à cette zone de l'écran, le code, tel que par exemple le code ASCII, des caractères alphanumériques présents dans cette zone d'écran.

Lors de l'opération 94, le module 62 de sélection interroge le module 32 de l'unité 8 pour obtenir en réponse la liste des terminaux de télécommunication disponibles. Cette liste comporte ici un identificateur d'un terminal correspondant au terminal de télécommunication 4 et un identificateur d'un terminal correspondant au terminal de télécommunication 6. Ensuite, le module de sélection 62 affiche la liste reçue sur l'écran 40. L'utilisateur du dispositif d'affichage 10 sélectionne alors dans la liste affichée le terminal de télécommunication qu'il souhaite utiliser. On suppose ici que l'utilisateur sélectionne l'identificateur de terminal correspondant au terminal 4.

Une fois les opérations précédentes effectuées, le numéro de téléphone extrait par le module 60 et l'identificateur du terminal sélectionné par l'utilisateur sont automatiquement transmis à l'unité 8 de transfert lors de l'opération 96. Cette opération 96 est exécutée par le module 64 de transmission d'informations.

L'étape 84 est exécutée lorsqu'un numéro de téléphone et un identificateur d'un terminal sont reçus par l'unité de transfert 8. Lors de cette étape 84, le module 30 transmet automatiquement le numéro de téléphone défini lors de l'étape 82 vers l'unique terminal correspondant à l'identificateur d'un terminal, c'est-à-dire ici le terminal 4.

Cette étape 84 se poursuit ensuite par l'étape 86 de réception et d'enregistrement du numéro de téléphone dans la mémoire 16 du terminal 4. Une fois le numéro de téléphone enregistré dans la mémoire 16 du terminal 4, l'utilisateur n'a plus qu'à enfoncer le bouton 18 pour déclencher l'appel vers le correspondant associé à ce numéro de téléphone.

L'unité de transfert 8 a été décrite ici comme étant une unité distincte du dispositif d'affichage, toutefois en variante, cette unité de transfert est intégrée soit dans le dispositif d'affichage 10, soit dans les terminaux de télécommunication 4 et 6.

Dans une variante simplifiée du mode de réalisation décrit ici, le dispositif d'affichage 10 comporte une mémoire associée au module de sélection 62, dans laquelle une liste des terminaux de télécommunication disponibles est pré-enregistrée. Par exemple, cette liste est enregistrée par l'utilisateur du dispositif d'affichage 10 avant la mise en oeuvre de ce dernier. Dans cette variante, le module de sélection est adapté pour sélectionner le terminal de télécommunication disponible dans cette liste pré-enregistrée. Ainsi, le module 32 d'établissement automatique de la liste des terminaux de télécommunication disponibles n'est plus nécessaire et est supprimé.

L'unité de transfert 8 est également adaptée dans une autre variante, non seulement pour transmettre le numéro de téléphone vers un terminal de télécommunication, mais également un ordre de déclenchement automatiquement de la composition du numéro de téléphone transmis par le terminal sélectionné à l'aide du module de sélection. Le terminal comporte pour sa part une unité de composition automatique du numéro de téléphone transmis, lors de la réception d'un ordre de déclenchement issu du dispositif d'affichage 10.

Le système décrit ici a été décrit dans le cas particulier où les références téléphoniques sont des numéros de téléphone. Toutefois, dans une autre variante, les références téléphoniques comprennent le nom du correspondant. Dans cette variante, les terminaux de télécommunication comportent chacun un annuaire téléphonique dans lequel est enregistré le numéro de téléphone associé au nom du correspondant. De plus, les terminaux de télécommunication sont adaptés pour effectuer la conversion du nom du correspondant en numéro de téléphone. Ainsi, dans cette adaptation du système 2, l'unité de transfert 8 ne transfère pas un numéro de téléphone, mais le nom du correspondant. Ce nom de correspondant est ensuite converti par le terminal de télécommunication en un numéro de téléphone à composer à l'aide de son annuaire téléphonique.

Dans une autre variante, l'ordinateur 10 comporte un annuaire téléphonique associant le nom d'un correspondant à son numéro de téléphone. De plus, le module 60 d'extraction de numéro de téléphone est adapté pour extraire le nom du correspondant et pour le convertir à l'aide de l'annuaire téléphonique en un numéro de téléphone destiné à être transmis par l'unité de transfert 8.

## Revendications

1. Système (2) d'assistance à l'établissement d'une liaison téléphonique vers un correspondant à appeler, le système comportant :
- un dispositif (10) d'affichage des références téléphoniques du correspondant, équipé d'une mémoire (48) apte à contenir les références téléphoniques à afficher,
- plusieurs terminaux de télécommunication autonomes (4, 6), chacun des terminaux étant propre à fonctionner indépendamment du dispositif d'affichage, et équipé d'une mémoire (16, 24) apte à contenir les références téléphoniques du correspondant à appeler, chaque terminal (4, 6) étant apte à établir une liaison téléphonique vers le correspondant dont les références téléphoniques sont enregistrées dans sa mémoire (16, 24),
- des moyens (56, 8, 20, 22, 28) de transfert automatique des références téléphoniques contenues dans la mémoire (48) du dispositif d'affichage vers la mémoire (16, 24) du terminal,
- des moyens d'activation des moyens de transfert automatique,
**caractérisé :**
- **en ce que** lesdits plusieurs terminaux de télécommunication (4, 6) sont raccordés au dispositif d'affichage (10) par l'intermédiaire d'un même réseau local (22) de transmission d'informations, et
- **en ce que** les moyens (56, 8, 20, 22, 28) de transfert automatique comportent un module (62) de sélection du terminal de télécommunication vers lequel les références téléphoniques du correspondant doivent être transférées.

2. Système (2) selon la revendication 1, **caractérisé en ce que** le dispositif d'affichage (10) comporte un émetteur (64) apte à transmettre les références téléphoniques du correspondant contenues dans sa mémoire (48), et le terminal de télécommunication (4, 6) comporte un récepteur (20, 28) apte à recevoir lesdites références téléphoniques transmises par l'émetteur et à les enregistrer dans la mémoire (16,24) du terminal, et **en ce que** l'émetteur (64) et le récepteur (20, 28) sont raccordés l'un à l'autre par l'intermédiaire d'un même réseau local (22) de transmission d'informations.

3. Système (2) selon la revendication 2, **caractérisé en ce que** le récepteur (20, 28) est un récepteur radio local.

4. Système (2) selon la revendication 3, **caractérisé en ce que** le réseau local (22) de transmission d'informations est un réseau "Bluetooth".

5. Système (2) selon l'une quelconque des revendications précédentes, **caractérisé en ce que** les références téléphoniques étant contenues dans une image numérique, les moyens (56, 8, 20, 22, 28) de transfert automatique comportent un module (60) d'extraction des références téléphoniques du correspondant, contenues dans l'image pour, transférer uniquement les références téléphoniques vers le terminal de télécommunication (4, 6).

6. Système (2) selon l'une quelconque des revendications précédentes, **caractérisé en ce que** les moyens (56, 8, 20, 22, 28) de transfert automatique comportent un module (32) d'établissement automatique d'une liste des terminaux de télécommunication disponibles, et **en ce que** le module de sélection (62) est adapté pour sélectionner le terminal de télécommunication dans cette liste.

7. Système (2) selon la revendication 6, **caractérisé en ce que** le module (32) d'établissement automatique d'une liste de terminaux de télécommunication disponibles est apte à utiliser le même réseau local (22) de transmission d'informations pour identifier les terminaux de télécommunication disponibles.

8. Procédé d'assistance à l'établissement d'une liaison téléphonique vers un correspondant à appeler, le procédé comportant :
- une étape (80) d'affichage des références téléphoniques du correspondant à l'aide d'un dispositif d'affichage (10) équipé d'une mémoire (48) apte à contenir les références téléphoniques affichées,
- une étape (86) d'établissement d'une liaison téléphonique vers le correspondant à partir d'un terminal de télécommunication (4, 6) distinct du dispositif d'affichage, le terminal de télécommunication (4, 6) étant équipé d'une mémoire (16, 24) et étant apte à établir une liaison téléphonique vers le correspondant dont les références téléphoniques sont enregistrées dans cette mémoire,
- une étape (84) de transfert automatique des références téléphoniques contenues dans la mémoire (48) du dispositif d'affichage vers la mémoire (16, 24) du terminal de télécommunication,
- une étape (82) d'activation du transfert automatique des références téléphoniques,
**caractérisé en ce qu'**il comporte :
- une étape (94) de sélection parmi plusieurs terminaux de télécommunication, d'un terminal de télécommunication vers lesquels les références téléphoniques du correspondant doivent être transférées.

9. Procédé selon la revendication 8, **caractérisé en ce que** les références téléphoniques étant contenues dans une image numérique, il comporte une étape (92) d'extraction des références téléphoniques du correspondant contenues dans l'image pour transférer uniquement les références téléphoniques vers le terminal de télécommunication.

10. Procédé selon la revendication 8 ou 9, **caractérisé en ce qu'**il comporte une étape (94) d'établissement automatique d'une liste des terminaux de télécommunication disponibles pour recevoir les références téléphoniques du correspondant à appeler, et **en ce que** l'étape de sélection d'un terminal de télécommunication est adaptée pour sélectionner le terminal de télécommunication dans la liste des terminaux de télécommunication disponibles précédemment établie.

11. Unité de transfert (8) adaptée pour être mise en oeuvre dans un système d'assistance à l'établissement d'une liaison téléphonique vers un correspondant à appeler selon l'une quelconque des revendications 1 à 7, ledit système comportant un dispositif (10) d'affichage des références téléphoniques du correspondant équipé d'une mémoire (48) apte à contenir les références téléphoniques à afficher, plusieurs terminaux de télécommunication (4, 6) équipés d'une mémoire (16, 24) apte à contenir les références téléphoniques du correspondant à appeler et un module (62) de sélection du terminal de télécommunication vers lequel les références téléphoniques du correspondant doivent être transférées, l'unité de transfert étant **caractérisée en ce qu'**elle comporte un module (30) de transfert automatique des références téléphoniques de la mémoire (48) du dispositif d'affichage vers la mémoire du terminal (4, 6) sélectionné à l'aide du module (62) de sélection.

12. Unité de transfert (8) selon la revendication 11, **caractérisée en ce qu'**elle comporte un module (32) d'établissement automatique d'une liste des terminaux de télécommunication (4, 6) disponibles.

## Claims

1. System (2) for assisting in setting up a telephone link to an opposite party to be called, the system comprising:
- a device (10) for displaying the telephone references of the opposite party, equipped with a memory (48) able to contain the telephone references to be displayed,
- several autonomous telecommunication terminals (4, 6), each of the terminals being suitable for operating independently of the display device, and equipped with a memory (16, 24) able to contain the telephone references of the opposite party to be called, each terminal (4, 6) being able to set up a telephone link to the opposite party whose telephone references are recorded in its memory (16, 24),
- means (56, 8, 20, 22, 28) for automatically transferring the telephone references contained in the memory (48) of the display device to the memory (16, 24) of the terminal,
- means for activating the automatic transfer means,
**characterized:**
- **in that** said several telecommunication terminals (4, 6) are connected to the display device (10) by way of one and the same local information transmission network (22), and
- **in that** the automatic transfer means (56, 8, 20, 22, 28) comprise a module (62) for selecting the telecommunication terminal to which the telephone references of the opposite party are to be transferred.

2. System (2) according to Claim 1, **characterized in that** the display device (10) comprises an emitter (64) able to transmit the opposite party's telephone references contained in its memory (48), and the telecommunication terminal (4, 6) comprises a receiver (20, 28) able to receive said telephone references transmitted by the emitter and to record them in the memory (16, 24) of the terminal, and **in that** the emitter (64) and the receiver (20, 28) are connected to one another by way of one and the same local information transmission network (22).

3. System (2) according to Claim 2, **characterized in that** the receiver (20, 28) is a local radio receiver.

4. System (2) according to Claim 3, **characterized in that** the local information transmission network (22) is a "Bluetooth" network.

5. System (2) according to any one of the preceding claims, **characterized in that** the telephone references being contained in a digital image, the means (56, 8, 20, 22, 28) of automatic transfer comprise a module (60) for extracting the opposite party's telephone references contained in the image so as to transfer solely the telephone references to the telecommunication terminal (4, 6).

6. System (2) according to any one of the preceding claims, **characterized in that** the means (56, 8, 20, 22, 28) of automatic transfer comprise a module (32) for automatically setting up a list of the available telecommunication terminals, and **in that** the selection module (62) is adapted for selecting the telecommunication terminal from this list.

7. System (2) according to Claim 6, **characterized in that** the module (32) for automatically setting up a list of available telecommunication terminals is able to use the same local information transmission network (22) to identify the available telecommunication terminals.

8. Method of assisting in setting up a telephone link to an opposite party to be called, the method comprising:
- a step (80) of displaying the telephone references of the opposite party with the aid of a display device (10) equipped with a memory (48) able to contain the displayed telephone references,
- a step (86) of setting up a telephone link to the opposite party from a telecommunication terminal (4, 6) distinct from the display device, the telecommunication terminal (4, 6) being equipped with a memory (16, 24) and being able to set up a telephone link to the opposite party whose telephone references are recorded in this memory,
- a step (84) of automatically transferring the telephone references contained in the memory (48) of the display device to the memory (16, 24) of the telecommunication terminal,
- a step (82) of activating the automatic transfer of the telephone references
**characterized in that** it comprises:
- a step (94) of selecting from among several telecommunication terminals, a telecommunication terminal to which the telephone references of the opposite party are to be transferred.

9. Method according to Claim 8, **characterized in that** the telephone references being contained in a digital image, it comprises a step (92) of extracting the opposite party's telephone references contained in the image so as to transfer solely the telephone references to the telecommunication terminal.

10. Method according to Claim 8 or 9, **characterized in that** it comprises a step (94) of automatically setting up a list of the available telecommunication terminals to receive the telephone references of the opposite party to be called, and **in that** the step of selecting a telecommunication terminal is adapted for selecting the telecommunication terminal from the previously set up list of the available telecommunication terminals.

11. Transfer unit (8) adapted for being implemented in a system for assisting in setting up a telephone link to an opposite party to be called according to any one of Claims 1 to 7, said system comprising a device (10) for displaying the telephone references of the opposite party equipped with a memory (48) able to contain the telephone references to be displayed, several telecommunication terminals (4, 6) equipped with a memory (16, 24) able to contain the telephone references of the opposite party to be called and a module (62) for selecting the telecommunication terminal to which the telephone references of the opposite party are to be transferred, the transfer unit being **characterized in that** it comprises a module (30) for automatically transferring the telephone references from the memory (48) of the display device to the memory of the terminal (4, 6) selected with the aid of the selection module (62).

12. Transfer unit (8) according to Claim 11, **characterized in that** it comprises a module (32) for automatically setting up a list of the available telecommunication terminals (4, 6).

## Patentansprüche

1. System (2) zur Unterstützung des Aufbaus einer Telefonverbindung mit einem anzurufenden Teilnehmer, wobei das System aufweist:
- eine Vorrichtung (10) zur Anzeige der Telefonreferenzen des Teilnehmers, ausgestattet mit einem Speicher (48), der fähig ist, die anzuzeigenden Telefonreferenzen zu enthalten,
- mehrere autonome Telekommunikations-Endgeräte (4, 6), wobei jedes der Endgeräte in der Lage ist, unabhängig von der Anzeigevorrichtung zu arbeiten und mit einem Speicher (16, 24) ausgestattet ist, der in der Lage ist, die Telefonreferenzen des anzurufenden Teilnehmers zu enthalten, wobei jedes Endgerät (4; 6) in der Lage ist, eine Telefonverbindung mit dem Teilnehmer aufzubauen, dessen Telefonreferenzen in seinem Speicher (16, 24) aufgezeichnet sind,
- Mittel (56, 8, 20, 22, 28) für den automatischen Transfer der im Speicher (48) der Anzeigevorrichtung enthaltenen Telefonreferenzen zum Speicher (16, 24) des Endgeräts,
- Mittel zur Aktivierung der automatischen Transfermittel,
**gekennzeichnet dadurch:**
- **dass** die mehreren Telekommunikations-Endgeräte (4, 6) mit der Anzeigevorrichtung (10) über das gleiche lokale Nachrichtenübertragungsnetz (22) verbunden sind, und
- dass die automatischen Transfermittel (56, 8, 20, 22, 28) einen Modul (62) zur Auswahl des Telekommunikations-Endgeräts enthalten, an das die Telefonreferenzen des Teilnehmers übertragen werden sollen.

2. System (2) nach Anspruch 1, **dadurch gekennzeichnet, dass** die Anzeigevorrichtung (10) einen Sender (64) aufweist, der in der Lage ist, die in ihrem Speicher (48) enthaltenen Telefonreferenzen des Teilnehmers zu übertragen, und das Telekommunikations-Endgerät (4, 6) einen Empfänger (20, 28) aufweist, der in der Lage ist, die vom Sender übertragenen Telefonreferenzen zu empfangen und sie in dem Speicher (16, 24) des Endgeräts aufzuzeichnen, und dass der Sender (64) und der Empfänger (20, 28) miteinander über das gleiche lokale Nachrichtenübertragungsnetz (22) verbunden sind.

3. System (2) nach Anspruch 2, **dadurch gekennzeichnet, dass** der Empfänger (20, 28) ein lokaler Funkempfänger ist.

4. System (2) nach Anspruch 3, **dadurch gekennzeichnet, dass** das lokale Nachrichtenübertragungsnetz (22) ein "Bluetooth"-Netz ist.

5. System (2) nach einem der vorhergehenden Ansprüche, **dadurch gekennzeichnet, dass** die Telefonreferenzen in einem digitalen Bild enthalten sind, und die automatischen Transfermittel (56, 8, 20, 22, 28) einen Modul (60) zur Entnahme der im Bild enthaltenen Telefonreferenzen des Teilnehmers aufweisen, um nur die Telefonreferenzen an das Telekommunikations-Endgerät (4, 6) zu übertragen.

6. System (2) nach einem der vorhergehenden Ansprüche, **dadurch gekennzeichnet, dass** die automatischen Transfermittel (56, 8, 20, 22, 28) einen Modul (32) zur automatischen Erstellung einer Liste der verfügbaren Telekommunikations-Endgeräte aufweisen, und dass der Auswahlmodul (62) geeignet ist, um das Telekommunikations-Endgerät aus dieser Liste auszuwählen.

7. System (2) nach Anspruch 6, **dadurch gekennzeichnet, dass** der Modul (32) zur automatischen Erstellung einer Liste von verfügbaren Telekommunikations-Endgeräten fähig ist, das gleiche lokale Nachrichtenübertragungsnetz (22) zu nutzen, um die verfügbaren Telekommunikations-Endgeräte zu identifizieren.

8. Verfahren zur Unterstützung des Aufbaus einer Telefonverbindung mit einem anzurufenden Teilnehmer, wobei das Verfahren aufweist:
- einen Schritt (80) der Anzeige der Telefonreferenzen des Teilnehmers mit Hilfe einer Anzeigevorrichtung (10), die mit einem Speicher (48) ausgestattet ist, der in der Lage ist, die angezeigten Telefonreferenzen zu enthalten,
- einen Schritt (86) des Aufbaus einer Telefonverbindung mit dem Teilnehmer ausgehend von einem von der Anzeigevorrichtung verschiedenen Telekommunikations-Endgerät (4, 6), wobei das Telekommunikations-Endgerät (4, 6) mit einem Speicher (16, 24) ausgestattet und fähig ist, eine Telefonverbindung mit dem Teilnehmer aufzubauen, dessen Telefonreferenzen in diesem Speicher aufgezeichnet sind,
- einen Schritt (84) des automatischen Transfers der im Speicher (48) der Anzeigevorrichtung enthaltenen Telefonreferenzen zum Speicher (16, 24) des Telekommunikations-Endgeräts,
- einen Schritt (82) der Aktivierung des automatischen Transfers der Telefonreferenzen,
**dadurch gekennzeichnet, dass** es aufweist:
- einen Schritt (94) der Auswahl unter mehreren Telekommunikations-Endgeräten eines Telekommunikations-Endgeräts, an das die Telefonreferenzen des Teilnehmers übertragen werden sollen.

9. Verfahren nach Anspruch 8, **dadurch gekennzeichnet, dass** die Telefonreferenzen in einem digitalen Bild enthalten sind und es einen Schritt (92) der Entnahme der im Bild enthaltenen Telefonreferenzen des Teilnehmers aufweist, um nur die Telefonreferenzen zum Telekommunikations-Endgerät zu übertragen.

10. Verfahren nach Anspruch 8 oder 9, **dadurch gekennzeichnet, dass** es einen Schritt (94) der automatischen Erstellung einer Liste der verfügbaren Telekommunikations-Endgeräte aufweist, um die Telefonreferenzen des anzurufenden Teilnehmers zu empfangen, und dass der Schritt der Auswahl eines Telekommunikations-Endgeräts geeignet ist, um das Telekommunikations-Endgerät in der vorher erstellten Liste der verfügbaren Telekommunikations-Endgeräte auszuwählen.

11. Transfereinheit (8), die geeignet ist, um in einem System zur Unterstützung des Aufbaus einer Telefonverbindung mit einem anzurufenden Teilnehmer gemäß einem der Ansprüche 1 bis 7 angewendet zu werden, wobei das System eine Anzeigevorrichtung (10) der Telefonreferenzen des Teilnehmers, die mit einem Speicher (48) ausgestattet ist, der fähig ist, die anzuzeigenden Telefonreferenzen zu enthalten, mehrere Telekommunikations-Endgeräte (4, 6), die mit einem Speicher (16, 24) ausgestattet sind, der fähig ist, die Telefonreferenzen des anzurufenden Teilnehmers zu enthalten, und einen Modul (62) zur Auswahl des Telekommunikations-Endgeräts aufweist, an das die Telefonreferenzen des Teilnehmers übertragen werden sollen, wobei die Transfereinheit **dadurch gekennzeichnet ist, dass** sie einen automatischen Transfermodul (30) der Telefonreferenzen vom Speicher (48) der Anzeigevorrichtung zum Speicher des Endgeräts (4, 6) aufweist, das mit Hilfe des Auswahlmoduls (62) ausgewählt wird.

12. Transfereinheit (8) nach Anspruch 11, **dadurch gekennzeichnet, dass** sie einen Modul (32) zur automatischen Erstellung einer Liste der verfügbaren Telekommunikations-Endgeräte (4, 6) aufweist.
